Europäisches Patentamt

European Patent Office

Office européen des brevets

(19)

(11) Veröffentlichungsnummer: **0 213 112**
**A1**

# (12) EUROPÄISCHE PATENTANMELDUNG

(21) Anmeldenummer: **86890213.1**

(22) Anmeldetag: **22.07.86**

(51) Int. Cl.⁴: **B 60 T  11/08,** B 60 T  7/04,
G 05 G  11/00

(30) Priorität: **23.07.85  AT 2172/85**

(43) Veröffentlichungstag der Anmeldung: **04.03.87**
**Patentblatt 87/10**

(84) Benannte Vertragsstaaten: **AT BE CH DE FR GB IT LI LU NL SE**

(71) Anmelder: **Wirmsberger, Gerhard, Rooseveltstrasse 2c,**
**A-4400 Steyr (AT)**

(72) Erfinder: **Wirmsberger, Gerhard, Rooseveltstrasse 2c,**
**A-4400 Steyr (AT)**

(54) **Einrichtung beim Anlegen einer Kraft.**

(57)  Die Erfindung betrifft eine Einrichtung beim Anlegen einer Kraft, insbesondere einer solchen, die durch Anwenden von Fußkraft erfolgt, vorzugsweise auf einen Hebel, wobei bei bzw. durch Anwenden der Fußkraft zumindest zwei Vorrichtungen (Hülse 13, Zahnstange 19) vorhanden sind, deren Auswirkung auf das Medium, z.B. in einem Zylinder (3) angeordnete Hydraulikflüssigkeit, auf das eine Krafteinwirkung erfolgt, jeweils unterschiedlich stark ist in bezug auf Kraft bzw. Menge des bewegten Mediums, wobei die Menge des bewegten Mediums und die darauf ausgeübte Kraft von zwei Vorrichtungen (Hülse 13, Zahnstange 19) in einem unterschiedlichen Verhältnis steht.

1

0213112

Beschreibung zur Patentanmeldung
"Einrichtung beim Anlegen einer Kraft"

Gegenstand der Erfindung ist eine Einrichtung beim Anlegen einer Kraft, insbesondere einer sölchen, die durch Anwendung von Fußkraft erfolgt, vorzugsweise auf einen Hebel.

Nach dem Stand der Technik hat der von Fußkraft betätigte Hebel, üblicherweise Bremspedalhebel genannt, einer Bremsbetätigungseinrichtung nur einen Angriffspunkt in Bezug auf die Verbindung, z.B. Kolbenstange, zum Kolben des von ihm betätigten Zylinders, z.B. des Hauptbremszylinders, einer Bremsbetätigungseinrichtung.

Mit anderen Worten ausgedrückt, der Angriffspunkt des genannten Hebels auf die besagte Verbindung beschränkt sich auf eine bestimmte Stelle, welche sich innerhalb gewisser Grenzen bewegen kann, wie in der Anmeldung 1517/85 vom 21. Mai 1985 festgehalten wird.

Das Übersetzungsverhältnis des auf den Kolben des Hauptbremszylinders wirkenden Hebelarmes, auf den sich die Bremspedalkraft erstreckt, ist daher im wesentlichen durch das vom Lüftspiel der Bremse verursachten Leerweg bestimmt.

Aufgabe der Erfindung ist es daher, eine Einrichtung anzugeben, die zumindest zwei Vorrichtung umfaßt, welche jeweils unterschiedliche Druckstufen in einem Zylinder, z.B. im Hauptbremszylinder, bei Betätigung des Bremspedalhebels bringen.

Erfindungsgemäß wird daher vorgeschlagen, eine Einrichtung zu schaffen, die zumindest zwei unterschiedliche Vorrichtungen umfaßt, von der verschiedene Verhältnisse in Bezug auf Kraft bzw. Weg    auf den Kolben des genannten Zylinders wirken.

./.

Weiters wird erfindungsgemäß vorgeschlagen, zumindest
einen weiteren Angriffspunkt am genannten Hebel anzuordnen, der auch auf die genannte Verbindung einwirkt,
wobei die genannten Angriffspunkte vorzugsweise unterschiedlichen Abstand in Bezug auf den Dreh- bzw. Abstützpunkt des genannten Hebels haben.

In weiterer Ausgestaltung der Erfindung ist eine Einrichtung vorhanden, durch die die genannte Verbindung
in seiner wirksamen Länge veränderbar ist, welche Einrichtung von zumindest einem der genannten Angriffspunkte betätigt wird.

Weitere Einzelheiten der Erfindung werden in der nachfolgenden Beschreibung geoffenbart, welche mit den
Zeichnungen erklärt wird, wobei die

     Fig. 1 eine erfindungsgemäße, schematisch dargestellte Ausführung bringt, während die

     Fig. 2 davon einen Schnitt gemäß A - A von Fig.
           1 zeigt und die

     Fig. 3 , 4  weitere Ausführungen bringen.

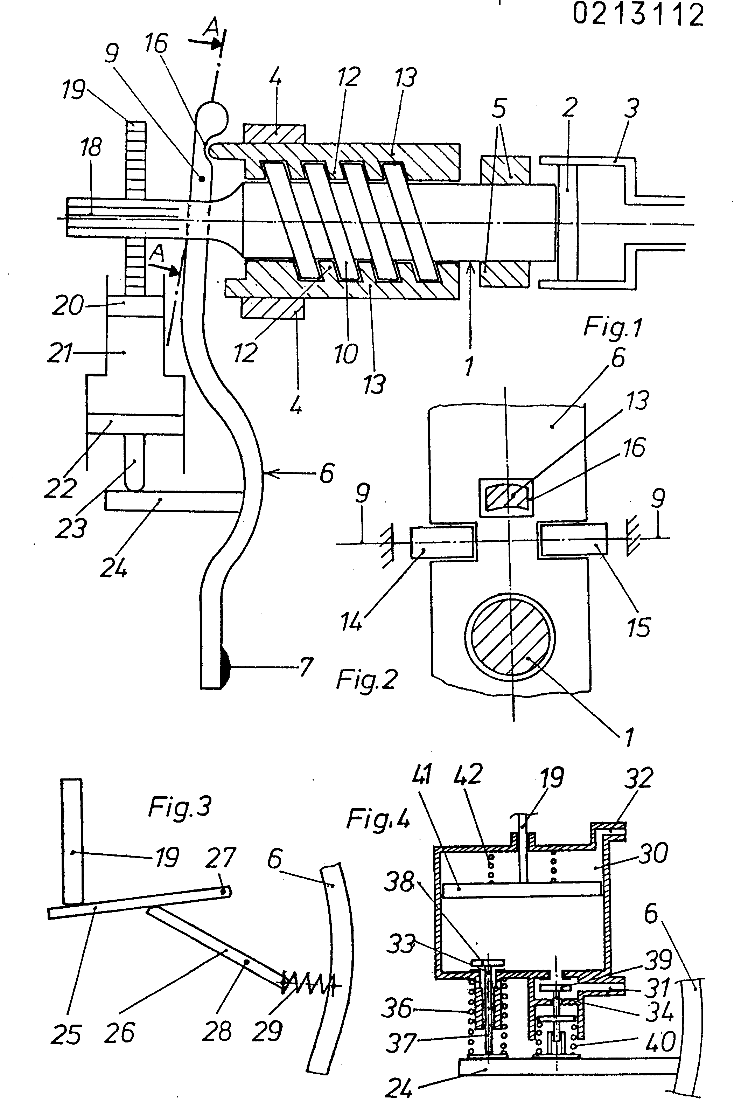

In Anlehung an die Fig. 1 der Anmeldung 1517/85 vom
21. Mai 1985 wird im Hauptbremszylinder 3 der Kolben 2
geführt, wobei die Kolbenstange 1 durch die Führungen
4, 5 gehalten wird, welche ein Außengewinde 10 aufweist,
also am besten ähnlich einer Spindel ausgeführt ist.
Das Außengewinde 10 greift in entsprechende Erhebungen
12 der Hülse 13, die damit gegen die Kolbenstange 1 verdrehbar ist.

Der mit dem Bremspedal 7 versehene Hebel 6 ist im Bereich der Kolbenstange 1 ausgenommen, d.h. die Kolbenstange geht durch den Bremspedalhebel 6 hindurch, wie
die Fig. 2 zeigt. Der Hebel 6 ist mit den Abstützungen

                                             .../.

0213112

14, 15 geführt, die mit dem Fahrzeugkörper fest verbunden sind. Weiters hat der Hebel 6 gemäß den Fig. 1 und
2 eine Ausnehmung 16, an die die Hülse 13 bei der Bremsbetätigung angreift und wodurch die Hülse 13 am Drehen
gehindert wird, was auch die Führung 4 erfüllen kann,
welche außen herum um die Hülse 13 angeordnet sein kann.
Die Kolbenstange 1 hat an ihrem linken, verjüngten Ende
außen Zähne 18, durch die diese von der Zahnstange 19
bewegbar ist, weil diese mit dem Kolben 20 des Hydraulikzylinders 21 verbunden ist. Im Zylinder 21 wird auch
der Kolben 22 geführt, der von der Kolbenstange 23 über
den abgewinkelten Hebelarm 24 des Bremspedalhebels 6
bewegbar ist.

Bei Bremsbetätigung durch Krafteinwirkung auf das Bremspedal 7 wird über den Drehpunkt 9 der untere Hebelarm
des Hebels 6 nach links bewegt, folglich drückt der
Hebelarm 24 die Kolbenstange 23 und damit die beiden
Kolben 22 und 20 sowie die Zahnleiste 19 nach oben,
die dadurch die Zähne 18 der Kolbenstange 1 bewegt,
wodurch entsprechend dem Außengewinde 10 und den Erhebungen 12 die Kolbenstange 1 in Richtung zum Zylinder 3, also nach rechts, gespurt wird.

Wie ersichtlich ist, wird die Kolbenstange 1, eine
richtige Dimensionierung der entsprechenden Teile
vorausgesetzt, im gleichen Zeitraum mehr bewegt als
der Hebel 6 im Bereich der Kolbenstange 1 bzw. der
Hülse 13. Mit anderen Worten, erfindungsgemäß wird
bei Bremsbetätigung die Kolbenstange schneller in
Richtung zum Zylinder 3 bewegt als der Hebel im genannten Bereich. Umgekehrt ist die auf die Kolbenstange 1 durch die Teile 19 - 24 wirkende Kraft viel
geringer als die vom Hebel 6 auf die Hülse 13 bzw.
auf die Kolbenstange 1 im genannten Bereich, sodaß
bei Aufbrauchen des Lüftspiels der Bremse die Hülse
13 voll mit der Kraft des Hebels 6 beaufschlagt
wird, der im Bereich der Hülse 13 eine große Über-

./.

setzung zuläßt.

Erfindungsgemäß wird also das Lüftspiel der Bremse mit einer viel geringeren Übersetzung bzw. bei stärkerer Bewegung von einer Menge der Hydraulikflüssigkeit überwunden, als das Andrücken des Bremsbelagträgers, folglich kann gemäß der Erfindung der zum Anwenden der Bremskraft verwendete Arm des Hebels 6 kleiner gehalten werden, was eine größere Übersetzung der Bremspedalkraft erlaubt.

Statt dem Zylinder 21 ist auch ein Gestänge einsetzbar. So zeigt die Fig. 3 die Umlenkhebeln 25 und 26 mit den am Fahrzeugkörper befestigten Drehpunkten 27, 28, wobei der Hebel 25 auf die entsprechend geführte Zahnleiste 19, diese bewegend, drückt, wenn bei Bremsbetätigung der Hebel 6 nach links geht. Eventuell kann eine Feder 29 als nachgiebiges Glied angeordnet werden, dessen Spiel dann aufgebraucht wird, wenn nach dem Ausgleichen des Lüftspiels der Bremse der Hebel 6 weiter betätigt wird, ohne jedoch, daß die Kolbenstange weiter durch die Zahnstange 19 gespurt wird.

Die Feder 29 kann auch zwischen Kolbenstange 23 und Hebelarm 24 angeordnet sein. Einer eventuell auftretenden Bruchgefahr bei Aufbrauchen des Lüftspiels kann auch durch eine nachgiebige Ausführung von bestimmten Teilen, z.B. des Hebelarms 24, verhindert werden. Wenn also bei Bremsbetätigung die Kraft des Bremspedalhebels 6 auf die Hülse 13 wirkt, d.i. nach Aufbrauchen des Lüftspiels, so gibt der Hebelarm 24 nach und die Krafteinwirkung der Zahnleiste 19 auf die Zähne 18 der Kolbenstange 1 erhöht sich nicht weiter.

Weiters kann statt dem Zylinder 21 ein Zylinder verwendet werden, in dem ein Unterdruck herrscht, wie die Fig. 4 zeigt in einem Ausführungsbeispiel.

./.

In der Ruhestellung der Bremse hält durch eine Feder 36 der Verschlußkörper 38 des Ventils 33 des Unterdruckzylinders 30 dessen Bohrung geschlossen und ein Verschlußkörper 39 eines Ventils 34 hält dessen Bohrung offen. Eine Ventilstange 37 ist an der Feder 36 befestigt, wodurch sie und der Verschlußkörper 38 nach unten gezogen wird, was auch beim Verschlußkörper 39 durch die Feder 40 erfolgt.

Durch mit dem Ansaugraum des Kfz-Motors verbundene Leitungen 31 und 32 wird ein Unterdruck im Zylinder 30 erzeugt, während das Ventil 33 die Verbindung von dem Zylinder 30 zur Außenluft steuert.

Bei Bremsbetätigung drückt der Hebelarm 24 auf die Federn 36 und 40, wodurch der Verschlußkörper 38 von der Bohrung des Ventils 33 abgehoben wird bzw. der Verschlußkörper 39 an die Bohrung des Ventils 34 gedrückt wird. Die Außenluft strömt daher durch das Ventil 33 in den Zylinder 30 und wirkt auf einen Kolben 41, da die Leitung 31 durch den Verschlußkörper 39 geschlossen ist. Der Kolben 41 wird folglich nach oben entgegen einer Rückstellfeder 42 bewegt, wodurch die Zahnstange 19 gegen die Zähne 18 der Kolbenstange 1 geschoben wird.

Bei Beenden der Bremsung übt der Hebelarm 24 keine Kraft mehr auf die Federn 36 und 40 aus, wodurch der Verschlußkörper 38 seine Bohrung wieder verschließt und der Verschlußkörper 39 seine Bohrung freigibt, sodaß der Kolben 41 durch die Rückstellfeder 42 nach unten geht.

Die Erfindung wurde anhand einer Bremsbetätigungseinrichtung erklärt, sie ist aber auch für andere Zwecke, z.B. bei einer Kupplung, einsetzbar.

- Patentansprüche -

0213112

Patentansprüche:

1. Einrichtung beim Anlegen einer Kraft, insbesondere einer solchen, die durch Anwendung von Fußkraft erfolgt, vorzugsweise auf einen Hebel, dadurch gekennzeichnet, daß bei bzw. durch Anwendung der Fußkraft zumindest zwei Vorrichtungen (Hülse 13, Zahnstange 19) vorhanden sind, deren Auswirkung auf das Medium, z.B. in einem Zylinder (3) angeordnete Hydraulikflüssigkeit, auf das eine Krafteinwirkung erfolgt, jeweils unterschiedlich stark ist in Bezug auf Kraft bzw. die Menge des bewegten Mediums, wobei die Menge des bewegten Mediums und die darauf ausgeübte Kraft von zwei Vorrichtungen (Hülse 13, Zahnstange 19) in einem unterschiedlichen Verhältnis steht.

2. Einrichtung nach Anspruch 1, dadurch gekennzeichnet, daß vom genannten Hebel (6) an zumindest zwei seiner Stellen eine Krafteinwirkung auf das genannte Medium erfolgt.

3. Einrichtung nach Anspruch 1 oder/und 2, dadurch gekennzeichnet, daß zwischen dem Hebel (6) und dem Kolben des Zylinders (3), in dem sich das genannte Medium befindet, eine Verbindung (Hülse 13, Kolbenstange 1) vohanden ist, die in ihrer wirksamen Länge veränderbar ist.

4. Einrichtung nach Anspruch 1, dadurch gekennzeichnet, daß eine der genannte Vorrichtung aus einem Hebel (6) und einer von ihm betätigten Hülse (13) besteht.

5. Einrichtung nach Anspruch 1, dadurch gekennzeichnet, daß eine der genannte Vorrichtung aus einem Hebel (6), einem Hydraulikzylinder (20) und aus einer Zahnleiste

./.

0213112

(19) besteht.

6. Einrichtung nach Anspruch 3 oder/und 5, <u>dadurch ge-kennzeichnet</u>, daß die Verbindung (Kolbenstange 1, Hülse 13) aus zumindest zwei, sich ineinander verstellbaren Teilen (Kolbenstange 1, Hülse 13) besteht und von zumindest einer der genannten Vorrichtungen betätigbar ist.

7. Einrichtung nach einem oder mehreren der vorangegan-gegangenen Ansprüche 1 - 6, <u>gekennzeichnet durch</u> Verwendung bei einer Bremsbetätigungseinrichtung (Hydraulikzylinder 3) oder bei einer Kupplung.

Anmerkung:

Bei der oben erwähnten Anmeldung 1517/85 vom 21. Mai 1985 handelt es sich um eine österreichische Patent-anmeldung.

0213112

Fig.1

Fig.2

Fig.3

Fig.4

Europäisches
Patentamt

**EUROPÄISCHER RECHERCHENBERICHT**

0213112
Nummer der Anmeldung

EP 86 89 0213

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 884 803 (WILLIS)<br>* Spalte 3, Zeilen 20-66; Figuren 1-3 * | 1-3,7 | B 60 T 11/08<br>B 60 T 7/04<br>G 05 G 11/00 |
| A | | 4,5 | |
| | --- | | |
| A | DE-A-1 455 682 (PORSCHE)<br><br>* Seite 4, Zeilen 13-27; Figuren 1,2 * | 1,4,5,<br>7 | |
| | --- | | |
| A | US-A-3 410 152 (KRUSEMARK)<br><br>----- | | |

| RECHERCHIERTE SACHGEBIETE (Int. Cl.4) |
|---|
| B 60 T 7/04<br>B 60 T 11/08<br>B 60 T 11/12<br>G 05 G 7/04<br>G 05 G 11/00 |

Der vorliegende Recherchenbericht wurde für alle Patentansprüche erstellt.

| Recherchenort | Abschlußdatum der Recherche | Prüfer |
|---|---|---|
| DEN HAAG | 22-10-1986 | HARTEVELD C.D.H. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82